# EUROPÄISCHE PATENTSCHRIFT

(11) **EP 2 994 410 B1**
(45) Veröffentlichungstag und Bekanntmachung des Hinweises auf die Patenterteilung: **02.08.2017**
(21) Anmeldenummer: 14723334.0
(22) Anmeldetag: 08.05.2014
(51) Int. Cl.: B66F 9/065, B66F 9/075, B66F 9/12, B62B 5/00, B66F 7/06, B66F 9/24, B66F 17/00

(54) **LADEVORRICHTUNG**
LOADING APPARATUS
DISPOSITIF DE CHARGEMENT

(30) Priorität: 08.05.2013 DE 102013008020
(43) Veröffentlichungstag der Anmeldung: 16.03.2016
(73) Patentinhaber: Hoerbiger Holding AG, 6304 Zug (CH)
(72) Erfinder: BAUDERMANN, Ulrich, CH-6300 Zug (CH)
(74) Vertreter: Grättinger Möhring von Poschinger Patentanwälte Partnerschaft
(86) Internationale Anmeldenummer: PCT/EP2014/001242
(87) Internationale Veröffentlichungsnummer: WO 2014/180572

(56) Entgegenhaltungen:
- EP-A1- 1 323 664
- WO-A2-2006/006860
- FR-A1- 2 702 751
- US-A- 4 288 195
- US-A1- 2011 262 261

## Beschreibung

Die vorliegende Erfindung betrifft eine Ladevorrichtung, geeignet insbesondere um Frachtgut auf einer Verkehrsfläche zu befördern und in ein Transportfahrzeug ein- bzw. aus diesem auszuladen, umfassend eine Basisstruktur, eine Ladestruktur mit einer Frachtgutaufnahme und eine zwischen der Basisstruktur und der Ladestruktur doppelt wirkende Hubeinrichtung. Insbesondere betrifft die vorliegende Erfindung eine Ladevorrichtung nach dem Oberbegriff des Anspruchs 1.

Im Stand der Technik gibt es eine Reihe von Vorschlägen für Ladevorrichtungen der eingangs angegebenen Art, welche übereinstimmend der Zielsetzung dienen, das Be- bzw. Entladen von Transportfahrzeugen mit Frachtgut zu erleichtern, damit dies - samt dem Befördern des Frachtguts auf einer Verkehrsfläche - möglichst durch eine einzige Person erledigt werden kann. Auf diese Weise soll beispielsweise der Personalaufwand beim Ausliefern von Frachtgut reduziert werden, indem ein Beifahrer, der ausschließlich kurzfristig beim Ladevorgang tätig wird, überflüssig wird. Indem die Hubeinrichtung doppelt-wirkend ausgeführt ist, kann sie nicht nur zum Anheben bzw. Absenken der Ladestruktur (samt dem geladenen Frachtgut) verwendet werden, sondern in gleicher Weise - bei auf die Ladefläche des Transportfahrzeugs aufgesetzter Ladestruktur - zum Anheben der Basisstruktur, um die Ladevorrichtung auf der Ladefläche des Transportfahrzeugs verstauen zu können.

Repräsentiert wird der einschlägige Stand der Technik insbesondere durch Veröffentlichungen wie die FR 1506606, DE 2530634, US 4061237, WO 83/04226, US 4613272, WO 92/07746, EP 889000, US 2005/0042068 und CN 201896055 U. Weitere Schriften, welche - vergleichbar zu FR 1506606, DE 25 30 634 und EP 889000 - eine Ladevorrichtung mit einem rückwärtig angeordneten zusätzlichen, vertikal ausfahrbaren Stützrad offenbaren, auf dem sich die Basisstruktur beim Anheben abstützt, sind die FR 2702751 und die EP 1323664. Eine dem Oberbegriff des Anspruchs 1 näherkommende Ladevorrichtung ist aus der WO 2006/006860 A2 bekannt. Bei ihr bilden die beiden Zinken eines Gabelstaplers den Hubrahmen und eine auf diesen verschiebbar geführte Struktur den Frachtgutträger. An der Unterseite eines Querträgers der den Frachtgutträger bildenden Struktur sind Zapfen vorgesehen, welche mit an der Ladefläche eines LKW angeordneten Gegenstücken zusammenwirken, wenn der Frachtgutträger auf der Ladefläche des LKW aufgesetzt wird, damit sich die Basisstruktur mittels der Hubeinrichtung selbst auf das Niveau der LKW-Ladefläche anheben kann.

Eine gattungsgemäße, dem Oberbegriff des Anspruchs 1 entsprechende Ladevorrichtung ist aus der US 2011/0262261 A1 bekannt. Bei ihr umfasst die Ladestruktur einen Hubrahmen, an welchem die - vier paarweise über Kreuz angeordnete Hydraulikzylinder aufweisende - Hubeinrichtung angreift, und einen Frachtgutträger, der an dem Hubrahmen über eine Ausziehführung mit einer quer zur Hubrichtung orientierten Ausziehrichtung gelagert ist und die Frachtgutaufnahme aufweist, wobei ein der Fortbewegung der Ladevorrichtung auf der Verkehrsfläche dienendes Fahrwerk Teil des Frachtgutträgers ist. Der sich bei der Nutzung dieser Ladevorrichtung vollziehende Ablauf stellt sich wie folgt dar: Frachtgut bzw. Last wird auf dem Frachtgutträger, der Teil der anhebbaren Ladestruktur ist und über das der Fortbewegung dienende Fahrwerk verfügt, aufgenommen auf einer Ausgangsfläche befördert. Die Basisstruktur wird auf der Ausgangsfläche abgesetzt, und die Ladestruktur wird - auf der Basisstruktur abgestützt - so weit angehoben, dass das Fahrwerk des Frachtgutträgers sich oberhalb des Niveaus einer gegenüber der Ausgangsfläche erhöhten Zielfläche befindet. Der Frachtgutträger wird quer zur Hubrichtung ausgefahren und dabei über die Zielfläche verfahren, und zwar ohne dass gleichzeitig die Basisstruktur bewegt wird, wobei sich der Frachtgutträger bei jenem Verfahren (ggf. nach einem Absenken) mit seinem Fahrwerk auf der Zielfläche abstützt. Die Basisstruktur wird, wenn der Frachtgutträger vollständig auf der Zielfläche aufsteht, vollständig angehoben und in Richtung auf die Frachtgutaufnahme eingefahren und über die Zielfläche verfahren. Eine Fortbewegung der Fracht bzw. Last auf der Zielfläche mittels des Fahrwerks des Frachtgutträgers kann sich anschließen.

Obwohl ersichtlich ein (zunehmender) Bedarf für Ladevorrichtungen der eingangs angegebenen Art besteht, konnten sich - mit einer Ausnahme - die diversen Vorschläge nicht in der Praxis etablieren. Und auch die - unter dem Handelsnamen "Innolift" - vertriebene Ladevorrichtung gemäß der WO 92/07746 bzw. der CN 201896055 U erfüllt die in sie gesetzten Erwartungen nicht.

Der vorliegenden Erfindung liegt die Aufgabe zugrunde, eine Ladevorrichtung der gattungsgemäßen Art bereitzustellen, die sich durch eine verbesserte Praxistauglichkeit auszeichnet.

Gelöst wird diese Aufgabenstellung gemäß der vorliegenden Erfindung, indem bei einer Ladevorrichtung der gattungsgemäßen Art die Hubeinrichtung einen Scherenheber umfasst, dessen in Ausziehrichtung gelegene Lagerung an der Basisstruktur als Festlager und dessen der Ausziehrichtung entgegengesetzt gelegene Lagerung an der Basisstruktur als Loslager ausgeführt ist. Dies ist günstig im Hinblick auf die Kinematik als auch im Hinblick auf die Statik sowie die Möglichkeit, die erfindungsgemäße Ladevorrichtung äußerst kompakt und leicht auszuführen. Indem die in Ausziehrichtung (der Frachtgutaufnahme) gelegene Lagerung des Scherenhebers an der Basisstruktur als Festlager und die der Ausziehrichtung entgegengesetzt gelegene Lagerung des Scherenhebers an der Basisstruktur als Loslager (mit in mindestens einer Linearführung geführtem Stützelement) ausgeführt ist, ergeben sich besonders günstige kinematische Verhältnisse. Zudem lässt sich bei erfindungsgemäßen Ladevorrichtungen die Hubeinrichtung besonders flach und raumsparend zusammenlegen, so dass sie in dieser Konfiguration unter der Ladestruktur untergebracht werden kann. Mit insoweit besonderem Vorteil ist dabei mindestens einer der Lenker des Scherenhebers gekröpft ausgeführt und/oder greift ein Antriebselement versetzt zum Gelenkpunkt des Scherenhebers an einem der Lenker an, was die Bereitstellung ausreichend hoher Hubkräfte bei - bei abgesenkter Ladestruktur - besonders flachen Scherenhebern ermöglicht.

In einer synergetischen funktionalen Wechselwirkung miteinander resultieren die in Kombination miteinander für die erfindungsgemäße Ladevorrichtung bestimmenden Merkmale in einer Reihe gravierender praxisrelevanter Vorzüge, welche insbesondere die Einsatzmöglichkeiten der Ladevorrichtung substantiell erweitern, deren Handhabung erleichtern und die Sicherheit um ein entscheidendes Maß erhöhen, wobei zugleich eine all diese Vorzüge aufweisende Ladevorrichtung konstruktiv vergleichsweise einfach - und somit zuverlässig - sowie leicht und kompakt ausgeführt sein kann. Gerade im Hinblick auf die Sicherheit ist - im Zusammenwirken mit den übrigen für die erfindungsgemäße Ladevorrichtung charakteristischen Merkmalen - verantwortlich, dass die Ladestruktur in dem Sinne mehrteilig aufgebaut ist, dass die Frachtgutaufnahme an einem Frachtgutträger angeordnet ist, welcher über eine Ausziehführung an einem Hubrahmen gelagert ist, an welchem wiederum die - das Heben und Senken der Ladestruktur bei auf der Verkehrsfläche aufstehender Basiseinheit bewirkende - Hubeinrichtung angreift. Denn auf diese Weise kann das Frachtgut ohne gleichzeitige Bewegung der Basisstruktur relativ zu der Verkehrsfläche (Ausgangsfläche) in den Laderaum bzw. auf die Ladefläche (Zielfläche) des Transportfahrzeugs verschoben werden. Weder beim Beladen des Transportfahrzeugs mit dem Frachtgut, noch beim Entladen des Frachtguts aus dem Transportfahrzeug muss bei angehobener Last bzw. angehobenem Frachtgut die Ladevorrichtung, d.h. deren Basisstruktur auf der Verkehrsfläche verfahren werden. Dies ist gerade im Hinblick auf Anwendungen, bei denen eine vergleichsweise unebene Verkehrsfläche bzw. ein vergleichsweise unebener sonstiger Untergrund existiert (beispielsweise beim Baustellenbetrieb) ein unschätzbarer Vorteil, weil ein solcher unebener Untergrund bei Verwendung von bekannten (insbesondere mit schwerer Fracht beladenen) Ladevorrichtungen deren Verfahren erheblich erschwert und darüber hinaus insbesondere bei einem Verfahren der Ladevorrichtung mit angehobener Last wegen einer Kippgefahr ein erhebliches Sicherheitsrisiko darstellt. Anders, als dies für jenen Stand der Technik (US 4613272, WO 92/07746 und CN 201896055 U) gilt, bei welchem die Basisstruktur ein Stück weit unter das Transportfahrzeug geschoben wird, lässt sich die erfindungsgemäße Ladevorrichtung auch in der (oft tatsächlich vorliegenden) Situation einsetzen, dass das Transportfahrzeug an eine Bordsteinkante herangefahren wird, und zwar typischerweise so weit, dass sich diese etwa unter der Ladekante befindet. Auch ist der Arbeitsablauf, wie er in Anwendung der Erfindung möglich ist, homogener und durch weniger Unterbrechungen geprägt, als dies für den Stand der Technik (insbesondere unter Verwendung von Ladevorrichtungen nach der WO 92/07746 und der CN 201896055 U) gilt, nämlich insbesondere in Anbetracht dessen, dass die Ladevorrichtung nach dem Aufladen typischerweise noch auf der Ladefläche des Transportfahrzeugs rangiert wird. Hierfür ist nach dem Stand der Technik erforderlich, die Last - durch teilweises Anheben der Ladestruktur - erneut auf die das Fahrwerk aufweisende Basisstruktur zu übergeben, wohingegen bei erfindungsgemäßen Ladevorrichtungen die Last sogleich auf das an dem Frachtgutträger angeordnete Fahrwerk abgesetzt wird (insbesondere auf Räder, die zusammen mit den lasttragenden strukturellen Bereichen des Frachtgutträgers Teil des der Fortbewegung der Ladevorrichtung dienenden Fahrwerks sind). Eine Reihe weiterer Vorteile werden aus der nachfolgenden detaillierten Erläuterung der vorliegenden Erfindung und spezifischer bevorzugter Weiterbindungen ersichtlich.

Die vorstehenden - wie auch die noch folgenden - Erläuterungen der vorliegenden Erfindung zeigen, dass die die erfindungsgemäße Ladevorrichtung definierenden Merkmale, soweit nichts anderes angegeben ist, breit zu verstehen sind. So kann die Basisstruktur jede beliebige konstruktive und statische Gestalt aufweisen, mittels derer sich die maßgebliche Funktion, die Hubstruktur auf der Verkehrsfläche abzustützen, erfüllen lässt. Ebenfalls ist der Begriff der "Verkehrsfläche" weit auszulegen und beinhaltet jeden tragfähigen, d.h. begehbaren bzw. befahrbaren Untergrund. Weiterhin ist unter "Hubrahmen" jede Struktur zu verstehen, die geeignet ist, mit der Hubeinrichtung verbunden zu werden und die von dem Frachtgutträger (samt aufgenommenem Frachtgut) über die Ausziehführung auf den Hubrahmen übertragenen Kräfte in die Hubeinrichtung einzuleiten. Auch hinsichtlich der "Ausziehführung" existieren keine konstruktiven Beschränkungen; vielmehr kann eine solche "Ausziehführung" durch jede im Wesentlichen linear längenveränderbare Struktur realisiert werden, die imstande ist, quer zur Ausziehrichtung Kräfte zu übertragen. Auch die Angabe, wonach die Ausziehrichtung "quer" zur Hubrichtung orientiert wird, besagt im weitesten Sinne nicht mehr, als dass die Ausziehrichtung mehr oder weniger rechtwinklig zur Hubrichtung orientiert ist, also insbesondere bei einer mehr oder weniger vertikalen Hubrichtung mehr oder weniger horizontal.

Auch und gerade hinsichtlich des "Fahrwerks" gibt es kaum konstruktive Einschränkungen. Während sich die vorliegende Erfindung für die meisten Anwendungen mit Vorteil mit Räderfahrwerken realisieren lässt, welche bevorzugt vier Räder aufweisen, so ist dies keinesfalls zwingend. Andere geeignete Fahrwerke, die für bestimmte Anwendungen mit Vorteil einsetzbar sind, sind beispielsweise Raupenfahrwerke, Kufenfahrwerke, Luftkissenfahrwerke, Magnetschwebefahrwerke und dergleichen. Entscheidend ist allein, dass eine Fortbewegung auf festen Untergrund wie der Verkehrsfläche und/oder der Ladefläche eines Transportfahrzeugs möglich ist. Wenn im Folgenden die vorliegende Erfindung anhand einer Ausführungsvariante erläutert wird, bei der das Fahrwerk als Räderfahrwerk ausgebildet ist, so dient dies allein der Erleichterung des Verständnisses, ohne dass hiermit eine Beschränkung auf Räderfahrwerke verbunden wäre. Die aufgezeigten Gesichtspunkte gelten, sofern sich nichts anderes ergibt, in gleicher Weise für andere Fahrwerkstypen.

Gemäß einer ersten bevorzugten Weiterbildung der Erfindung umfasst das - einen Teil der Frachtgutaufnahme bildende - Fahrwerk (vorzugsweise vier) Räder, welche besonders bevorzugt randseitig an dem Frachtgutträger angeordnet sind, und zwar idealerweise direkt unter den seitlichen Begrenzungen des Frachtgutträgers bzw. unmittelbar außerhalb neben diesen. So ergibt sich eine große Spurweite des Fahrwerks, was einen bedeutenden sicherheitsrelevanten Aspekt darstellt. Zudem lassen sich insbesondere in diesem Falle Räder mit einem vergleichsweise großem Durchmesser einsetzen, was die Handhabung erleichtert und - wiederum im Hinblick auf die Verwendung der Ladevorrichtung auf einem unebenen Untergrund - ebenfalls ein sicherheitsrelevanter Aspekt ist. Im Interesse einer guten Handhabbarkeit ist bevorzugt mindestens ein Teil der Räder lenkbar, d.h. die betreffenden Räder sind z.B. als Lenkrollen (ggf. feststellbar für Geradeausfahrt) ausgeführt; dies erleichtert das Manövrieren der Ladevorrichtung auf der Verkehrsfläche und/oder der Ladefläche des Transportfahrzeugs. Zudem ist bevorzugt zumindest ein Teil der Räder mit Bremsen ausgestattet, die beispielsweise beim Ladevorgang dann angezogen werden, wenn der Frachtgutträger auf der Ladefläche des Transportfahrzeugs abgesetzt wurde und - unter Verwendung der Hubeinrichtung - die Basisstruktur anzuheben ist, um anschließend wieder unter die Ladestruktur geschoben zu werden. (Im Hinblick auf die Möglichkeit, die Hubeinrichtung raumsparend möglichst flach unter der Ladestruktur unterzubringen, ist die weiter oben eingehend erläuterte Verwendung eines Scherenhebers entscheidend.) Für die Handhabung der Ladevorrichtung ist dabei günstig, wenn die Bremsen fernbetätigbar sind, beispielsweise von einer am rückwärtigen Ende der Ladevorrichtung angeordneten, mit entsprechenden Bedienelementen ausgestatteten Handhabe aus. Ein Lagesichern der Ladevorrichtung auf der Zielfläche ist durch Abheben des Frachtgutträger-Fahrwerks von der Zielfläche unter Aufsetzen der Basisstruktur auf der Zielfläche möglich.

Nachdem die Basisstruktur bei angehobener Last nicht auf dem Untergrund bewegt zu werden braucht, wird sich typischerweise eine hinreichende Kippsicherheit mit einer Basisstruktur erzielen lassen, die sich seitwärts nicht über die Spurbreite der Räder hinaus erstreckt. Dies ermöglicht einen kompakten Aufbau der Ladevorrichtung, wobei im Allgemeinen die Basisstruktur sogar vollständig in dem Zwischenraum zwischen den Rädern Platz findet. Sie kann allerdings auch auf der der Ausziehrichtung entgegen gesetzten Seite Stützfüße aufweisen, deren Ausladung im Wesentlichen der Spur der Räder entspricht. Für extreme Einsätze kommt, gemäß einer abermals anderen Weiterbildung der Erfindung, auch in Betracht, die Basisstruktur mit ausfahrbaren, ausziehbaren und ausklappbaren Stützfüßen auszustatten, um die Standsicherheit nochmals zu steigern.

Nachdem das zum Befördern der Ladevorrichtung (ggfs. samt aufgenommenem Frachtgut) auf der Verkehrsfläche geeignete Fahrwerk Teil des Frachtgutträgers ist, brauchen an der Basisstruktur keine Räder angeordnet zu sein. Dies spart Gewicht und ist unter statischen Gesichtspunkten von großem Vorteil. Absolut zwingend ist die Abwesenheit von Rädern bzw. Rollen an der Basisstruktur indessen nicht. So können beispielsweise (kleine) Rollen vorgesehen sein, welche allein dazu dienen, beim Verfahren der Ladevorrichtung auf der Verkehrsfläche das Gewicht der Basisstruktur zu stützen, so dass diese nicht von der Hubeinrichtung angehoben zu werden braucht.

Eine andere bevorzugte Weiterbildung der vorliegenden Erfindung zeichnet sich dadurch aus, dass die Hubeinrichtung eine elektrische oder eine elektro-hydraulische Antriebseinheit umfasst. Dies ermöglicht kompakte und gleichwohl sehr leistungsfähige Ladevorrichtungen, wobei namentlich bei größeren, zum Heben besonders schwerer Frachtgüter bestimmten Ladevorrichtungen der Einsatz elektro-hydraulischer Antriebseinheiten für die Hubeinrichtungen besonders vorteilhaft ist. Eine insoweit vorgesehene elektrische Speichereinheit der Antriebseinheit ist besonders bevorzugt an der Ladestruktur angeordnet, und zwar besonders bevorzugt am Hubrahmen an dessen in Ausziehrichtung vorne liegender Frontseite. Dies trägt, ohne dass eine (bei Anordnung der Speichereinheit an dem Frachtgutträger erforderliche) aufwändige Verlegung von elektrischen Leitungen notwendig ist, zu einer vergleichsweise günstigen Gewichtsverteilung bei, insbesondere im Hinblick auf die Phase des Anhebens bzw. Absenkens der Basisstruktur bei auf die Ladefläche des Transportfahrzeugs aufgesetztem Frachtgutträger. Wenn dabei die elektrische Speichereinheit einen Ladeanschluss aufweist, welcher an die elektrische Anlage eines (als Kraftfahrzeugs ausgeführten) Transportfahrzeugs anschließbar ist, so genügt für typische Anwendungen eine vergleichsweise kleine elektrische Speichereinheit. Dies ist vorteilhaft im Hinblick auf Kosten, Gewicht und Baugröße der Ladevorrichtung. Günstig ist auch, die elektrische Speichereinheit der Antriebseinheit als Wechselakku auszuführen. Dies gestattet die sehr kleinformatige Ausführung der Speichereinheit, damit diese in eine vergleichsweise kompakte Ladevorrichtung passt, ohne dass die Nutzungsmöglichkeiten der Ladevorrichtung hierdurch beschränkt würden. Ein der Ladevorrichtung entnommener Wechselakku kann an der elektrischen Anlage eines Transportfahrzeuges aufgeladen werden.

Eine weitere Antriebseinheit bewirkt in einer abermals anderen bevorzugten Weiterbildung der vorliegenden Erfindung das Ausfahren und Einfahren des Frachtgutträgers relativ zum Hubrahmen. Ein solcher Ausfahrantrieb kann beispielsweise elektrisch ausgeführt sein. Ebenfalls könnte ein solcher Ausfahrantrieb beispielsweise einen Hydraulikzylinder umfassen, der von dem Hydraulikaggregat der elektro-hydraulischen Antriebseinheit der Hubeinrichtung versorgt wird. Unter Aspekten der Betriebssicherheit ist vorteilhaft, wenn auf den Ausfahrantrieb eine Steuerung einwirkt, welche die Ausfahrbewegung unter Berücksichtigung von sicherheitsrelevanten Kenngrößen steuert. So kann in der Steuerung beispielsweise das Signal mindestens eines an dem Frachtgutträger, bevorzugt im Bereich frontseitiger Räder, angeordneten, der Erfassung der Position des Frachtgutträgers relativ zu einer Ladefläche dienenden Sensors dergestalt verarbeitet werden, dass das (über einen festgesetzten Ausfahrweg von beispielsweise 400mm fortgesetzte) Ausfahren des Frachtgutträgers unterbunden wird, wenn sich das Fahrwerk nicht zumindest teilweise über einer Ladefläche befindet. Auch die Höhe des Fahrwerks des Frachtgutträgers oberhalb der Ladefläche kann in der Steuerung dergestalt berücksichtigt werden, dass ein (weiteres) Ausfahren des Frachtgutträgers unterbunden wird, wenn sich das Fahrwerk in einer oberhalb eines zulässigen Werts liegenden Höhe über einer Ladefläche befindet. Weiterhin können in der Steuerung des Ausfahrantriebs Signale von Lastsensoren, welche Stützfüßen der Basisstruktur und/oder Rädern des Fahrwerks zugeordnet sind, in dem Sinne ausgewertet werden, dass ein (weiteres) Ausfahren des Frachtgutträgers unterbleibt, wenn eine auf eine zunehmende Kippgefahr hindeutende Belastungssituation ermittelt wird. Die besagten sicherheitsrelevanten Kenngrößen können zusätzlich (oder alternativ) auch für die Erzeugung einer Benachrichtigung bzw. Warnung verwendet werden.

Unter statischen Gesichtspunkten kann es günstig sein, wenn die Basisstruktur zu ihrer Abstützung auf der Verkehrsfläche eine vergleichsweise große, durchgehende Auflagefläche aufweist. Umgekehrt kann es indessen für bestimmte Anwendungen auch vorteilhaft sein, an der Basisstruktur ausgeprägte Stützfüße anzuordnen. Dies gilt namentlich dann, wenn zumindest einem Stützfuß ein Lastsensor (s.o.) zugeordnet wird, der die Lastsituation überwacht und beispielsweise ein Signal auslöst, wenn sich die Lastverteilung einem im Hinblick auf die Standsicherheit kritischen Punkt annähert. Derartige Lastsensoren können mit dem gleichen Vorteil auch mindestens einem der an dem Frachtgutträger angeordneten Räder zugeordnet sein.

Der Frachtgutträger und der Hubrahmen sind besonders bevorzugt relativ zueinander verriegelbar. Und die Hubeinrichtung ist bevorzugt in einer teilweise angehobenen Stellung der Ladestruktur sperrbar. Dies ermöglicht es, für die Fahrt des Transportfahrzeuges die Ladevorrichtung auf der Ladefläche dadurch zu sichern, dass die Ladestruktur mittels der Hubeinrichtung so weit angehoben wird, dass die an dem Frachtgutträger angeordneten Räder von der Ladefläche abgehoben werden, wobei zudem über die Verriegelung des Frachtgutträgers relativ zum Hubrahmen die Lage des Frachtgutträgers und somit des Frachtguts relativ zur Basisstruktur gesichert wird. Vorteilhafterweise ist dabei, beispielsweise über einen entsprechende Einstellung in einer Steuerung der Ladevorrichtung, eine solche (teilweise angehobene) Stellung der Hubeinrichtung fest vorgegebenen, in der das Fahrwerk des Frachtgutträgers gerade außer Kontakt mit dem Untergrund gebracht wird, so dass sich das gesamte Gewicht von Ladevorrichtung und Last - bei möglichst niedrigem Schwerpunkt - ausschließlich über die Basisstruktur auf dem Untergrund abstützt. Zur Sicherung des Frachtguts an bzw. auf dem Frachtgutträger weist Letzterer bevorzugt zur Anbringung von Befestigungs- und/oder Sicherungsmitteln für das Frachtgut geeignete Halterungen auf, beispielsweise Ösen, Bohrungen, Durchbrüche oder Haken.

Für die Bedienung der Ladevorrichtung samt deren Rangieren bzw. Manövrieren sowie die Betätigung vorgesehener Antriebe weist die Ladevorrichtung bevorzugt an ihrem rückwärtigen, der Ausziehrichtung entgegengesetzten Ende eine Handhabe auf, die mit entsprechenden, der Betätigung der Antriebe dienenden Bedienelementen ausgestattet ist. Bevorzugt ist eine solche Handhabe an der Basisstruktur oder dem Hubrahmen angeordnet. Die Anordnung und Ausgestaltung der Handhabe erfolgt dabei bevorzugt dergestalt, dass sie weder ein (vorzugsweise vollständiges) Unterschieben der Basisstruktur unter die Ladestruktur behindert, noch ständig nennenswert über die Minimalkontur der Hauptkomponenten des Ladegeräts (bei abgesenkter Ladestruktur und eingefahrenem Frachtgutträger) übersteht. In diesem Sinne kann die Handhabe beispielsweise gelenkig schwenk- bzw. klappbar und/oder einschiebbar an der Basisstruktur oder am Hubrahmen angebracht sein. Die Handhabe und/oder ihre Anbringung an der Basisstruktur bzw. dem Hubrahmen ist dabei vorzugsweise so ausgeführt, dass an ihr angeordnete Griffe auch bei einer bestimmungsgemäß beim Betrieb des Ladevorrichtung erfolgenden Veränderung der Höhe von Basisstruktur bzw. Hubrahmen über dem Untergrund ihre eigene Höhe nicht oder nur geringfügig verändern. Vor dem gleichen Hintergrund ist, gemäß einer anderen bevorzugten Weiterbildung, besonders vorteilhaft, wenn die Handhabe eine ausfahrbare, z.B. teleskopische verlänger- bzw. verkürzbare Deichsel aufweist; denn dies erleichtert die Bedienung der Ladevorrichtung bei ihrer bestimmungsgemäßen Verwendung, während derer sich die Höhe des Hubrahmens und der Basisstruktur über der Verkehrsfläche ändert. Besonders komfortabel ist es, wenn die Länge der Deichsel mittels eines Längenverstellantriebs veränderbar ist. Dieser kann, im Interesse einer weiter gesteigerten Bedienfreundlichkeit, mit dem Hubantrieb phasenweise in dem Sinne koppelbar sein, dass sich die Länge der Deichsel automatisch verkürzt, wenn die Komponente (Basisstruktur oder Hubrahmen), an der sie angebracht ist, mittels der Hubeinrichtung angehoben wird. Im Falle der Anbringung der Deichsel an dem Hubrahmen ist hierfür eine (phasenweise) inverse Koppelung des Längenverstellantriebs der Deichsel mit dem Antrieb der Hubeinrichtung vorzusehen. Unter ergonomischen Gesichtspunkten ist im Übrigen vorteilhaft, wenn die Ausfahrrichtung der Deichsel schräg zur Hubrichtung orientiert, d.h. insbesondere leicht nach hinten geneigt ist.

Für eine möglichst vielfältige Nutzbarkeit der erfindungsgemäßen Ladevorrichtung weist bei dieser, gemäß einer abermals anderen bevorzugten Weiterbildung, der Frachtgutträger einen austauschbaren, funktions- bzw. anwendungsspezifischen Aufsatz auf. Ein solcher Aufsatz kann beispielsweise eine (ebene) Ladeplattform, eine Schüttgutaufnahme oder eine Spezialhalterung (z.B. für eine Kabeltrommel) umfassen.

Namentlich besonders große Ladevorrichtungen können mit einem zusätzlichen, auf mindestens eines der Räder wirkenden Fahrantrieb ausgestattet sein, der zur Unterstützung der Bedienperson beim Bewegen der Ladevorrichtungen auf der (ggf. unebenen) Verkehrsfläche bzw. der Ladefläche des Transportfahrzeugs (einschließlich des Rangierens) einsetzbar ist.

Die erfindungsgemäße Ladevorrichtung kann, was allerdings für typische Anwendungen nicht erforderlich ist, mindestens eine frontseitig an dem Frachtgutträger angeordnete veränderlich positionierbare Behelfsrolle aufweisen. Diese kann notfalls im Rahmen des Übersetzens des Frachtgutträgers auf die Ladefläche des Transportfahrzeugs eingesetzt werden, beispielsweise bei instabilen Stand der Basisstruktur aufgrund eines nicht tragfähigen Untergrunds oder aber wenn die Ladevorrichtung aus irgend welchen Gründen nicht unmittelbar an das Transportfahrzeug heran gefahren werden konnte.

Aus den vorstehenden Erläuterungen ist ersichtlich, dass die Be- bzw. Entladung von Transportfahrzeugen mittels der erfindungsgemäßen Ladevorrichtung nur eine beispielhafte von vielen denkbaren Anwendungen darstellt. Einsetzbar ist die erfindungsgemäße Ladevorrichtung, die insoweit auch als kombinierte Beförder- und Hubvorrichtung bezeichnet werden könnte, auch in diversen anderen Anwendungsumgebungen, beispielsweise in der Kommissionier- und Lagertechnik.

Im Folgenden wird die vorliegende Erfindung anhand zweier in der Zeichnung veranschaulichter Ausführungsbeispiele näher erläutert. Dabei zeigt
- Fig. 1: in Seitenansicht eine erste Ausführungsform einer erfindungsgemäßen Ladevorrichtung in einer ersten Konfiguration,
- Fig. 2: in perspektivischer Ansicht die Ausführungs-form nach Fig. 1 in ihrer ersten Konfiguration,
- Fig. 3: in Seitenansicht die Ausführungsform nach den Fig. 1 und 2 in einer zweiten Konfiguration,
- Fig. 4: in perspektivischer Ansicht die Ausführungsform nach den Fig. 1 bis 3 in ihrer zweiten Konfiguration,
- Fig. 5: in Seitenansicht die Ausführungsform nach den Fig. 1 bis 4 in einer dritten Konfiguration,
- Fig. 6: in perspektivischer Ansicht die Ausführungsform nach den Fig. 1 bis 5 in ihrer dritten Konfiguration,
- Fig. 7: in perspektivischer Ansicht eine zweite Ausführungsform einer erfindungsgemäßen Ladevorrichtung in einer ersten Konfiguration,
- Fig. 8: die Ausführungsform nach Fig. 7 in einer zweiten Konfiguration,
- Fig. 9: die Ausführungsform nach den Fig. 7 und 8 in einer dritten Konfiguration
- Fig. 10: die Ausführungsform nach den Fig. 7 bis 9 in einer vierten Konfiguration und
- Fig. 11: in vergrößerter Darstellung in einem Vertikalschnitt eine Ladevorrichtung mit einer über einen bevorzugten Scherenheber verfügende Hubeinrichtung.

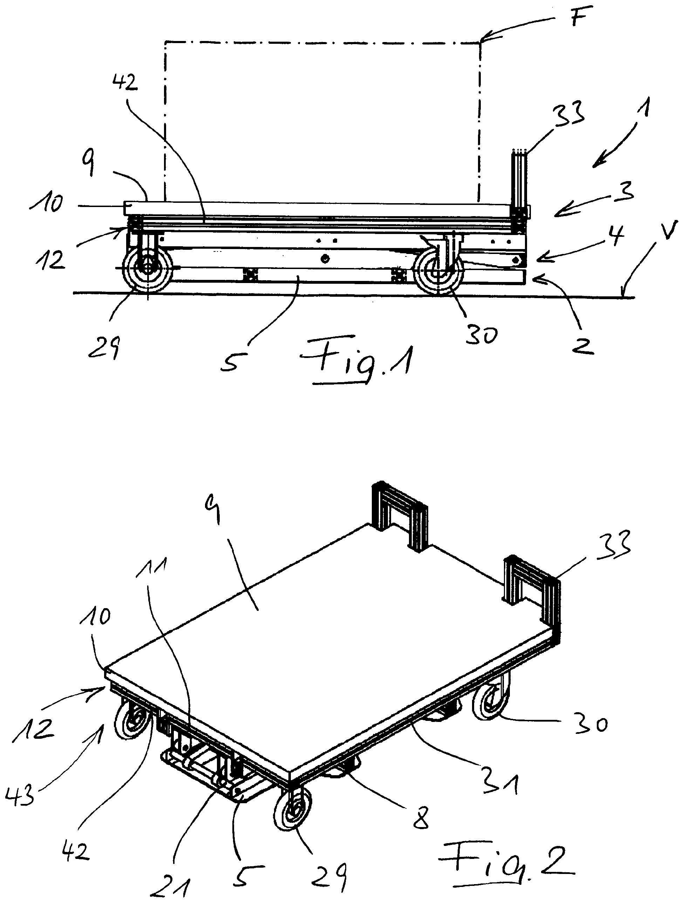

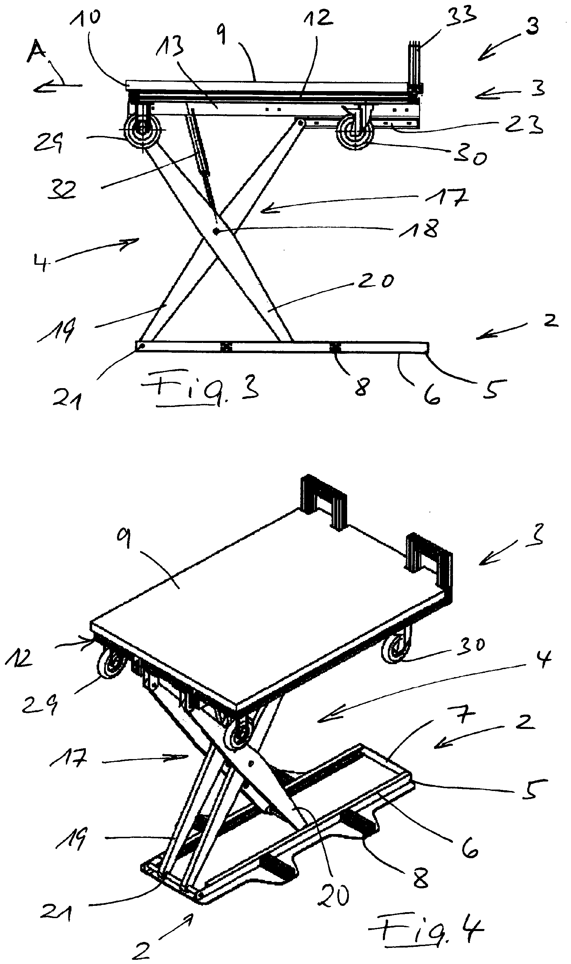

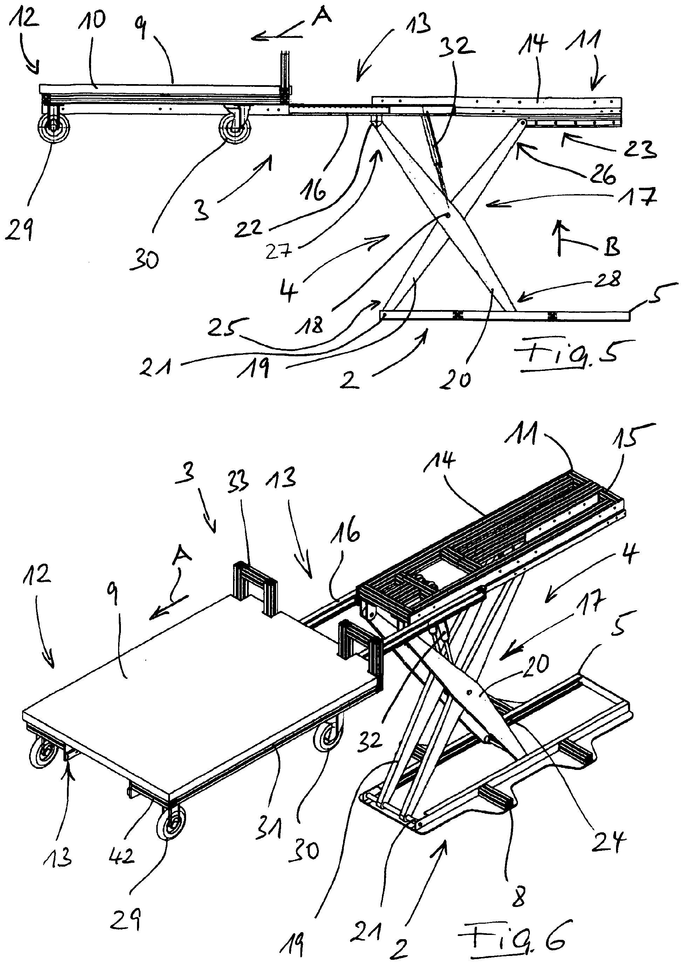

Die in den Fig. 1 bis 6 in verschiedenen Konfigurationen (d.h. Betriebssituationen) und Ansichten gezeigte Ladevorrichtung 1 dient der Beförderung von Frachtgut F auf einer Verkehrsfläche V sowie dem Einladen des Frachtguts in ein Transportfahrzeug bzw. dem Ausladen aus diesem.

Die Ladevorrichtung umfasst drei Hauptkomponenten, nämlich eine Basisstruktur 2, eine Ladestruktur 3 und eine zwischen der Basisstruktur 2 und der Ladestruktur 3 wirkende, dem Anheben und Absenken der Ladestruktur 3 dienende Hubeinrichtung 4. Die Hubeinrichtung 4 ist dabei in dem Sinne doppelt-wirkend ausgeführt, dass sie auch geeignet ist, bei ortsfester Ladestruktur 3 die Basisstruktur 2 anzuheben.

Die Basisstruktur 2 ist als Grundrahmen 5 ausgeführt mit zwei Längsträgern 6 und zwei sich zwischen und quer zu diesen erstreckenden Querträgern 7. Beidseits stehen von den Längsträgern 6 zwei ausgesteifte Stützfüße 8 seitwärts ab. Im Sinne einer - aus Gründen der Standsicherheit ggf. zweckmäßigen - Modifikation der Basisstruktur 2 können auch ausfahrbare, ausziehbare oder ausklappbare Stützfüße mit einer im Einsatz breiteren Ausladung zum Einsatz kommen.

Die Ladestruktur 3, die eine - vorliegend eine als Ladeplattform 9 ausgeführte - Frachtgutaufnahme 10 aufweist, umfasst einen Hubrahmen 11, einen Frachtgutträger 12 mit der Ladeplattform 9 und eine Ausziehführung 13, mittels derer der Frachtgutträger 12 an dem Hubrahmen 11 ausziehbar (Pfeil A) gelagert ist. Der Hubrahmen 11 umfasst Längsträger 14 und sich zwischen und quer zu diesen erstreckende Querträger 15. An ihm greift die Hubeinrichtung 4 an. Die Ausziehrichtung A, in welcher der Frachtgutträger 12 aus seiner zu dem Hubrahmen 11 im Wesentlichen fluchtenden Stellung in eine gegenüber dem Hubrahmen 11 versetzte Stellung ausfahrbar ist, ist dabei quer zu der Hubrichtung (Pfeil B) orientiert, welche durch die Hub- und Senkbewegung der Ladestruktur 3 gegenüber der Basisstruktur 2 definiert ist. Durch Einsatz einer Zwischenschiene 16 ist die Ausziehführung 13 als Vollauszug ausgeführt, so dass der Frachtgutträger 12 in seiner ausgefahrenen Stellung vollständig gegenüber dem Hubrahmen 11 versetzt ist. Der Frachtgutträger 12 weist (nicht näher dargestellte) Halterungen auf, die zur Anbringung von Befestigungs- und/oder Sicherungsmitteln für das Frachtgut F geeignet sind. Im Sinne einer - anwendungsbezogenen - Modifikation könnte der Frachtgutträger 12, an den jeweiligen spezifischen Einsatz angepasst, im Übrigen statt einer Ladeplattform 9 beispielsweise eine Schüttgutaufnahme (wie einen Trog oder dergl.) oder eine Spezialhalterung (wie eine Kabeltrommelhalterung oder dergl.) aufweisen.

Die Hubeinrichtung 4 umfasst einen Scherenheber 17 mit zwei gekreuzten, im Kreuzungspunkt 18 gelenkig miteinander verbundenen Lenkerpaaren 19, 20. Jedes Lenkerpaar 19, 20 ist an seinem einem Ende mit dem betreffenden Bauteil über ein Festlager 21, 22 gelenkig verbunden und an seinem anderen Ende an dem anderen Bauteil längs einer Linearführung 23, 24 verschiebbar geführt. So ist das erste Lenkerpaar 19 an seinem unteren - und in Ausziehrichtung A vorderen - Ende 25 mit dem Grundrahmen 5 über ein Festlager 21 gelenkig verbunden und an seinem oberen Ende 26 an dem Hubrahmen 11 längs einer Linearführung 23 verschiebbar geführt; und das zweite Lenkerpaar 20 ist an seinem oberen Ende 27 mit dem Hubrahmen 11 über ein Festlager 22 gelenkig verbunden und an seinem unteren Ende 28 an dem Grundrahmen 5 längs einer Linearführung 24 verschiebbar geführt. Der Kreuzungspunkt 18 der beiden Lenkerpaare 19, 20 wandert demgemäß beim Anheben der Ladestruktur 3 auf einer Kreisbahn um das Festlager 21 des ersten Lenkerpaares 19 und bewegt sich dabei (auch) mit einer Bewegungskomponente in Ausziehrichtung A. Im Sinne einer - aus kinematischen Gründen ggf. zweckmäßigen - Modifikation des Scherenhebers 17 können auch (als solches bekannte) gekröpfte Lenker zum Einsatz kommen.

Vier der Fortbewegung der Ladevorrichtung 1 auf der Verkehrsfläche V - für das Befördern des Frachtguts F auf dieser - dienende Räder 29, 30 sind an dem Frachtgutträger 12 angeordnet, und zwar randseitig an diesem unmittelbar unterhalb der Seitenränder 31. Sie bilden mit den Rahmenteilen 42 des Frachtgutträgers 12 ein Fahrwerk 43. Die - in Ausziehrichtung A - vorderen Räder 29 sind vorliegend als Bockrollen ausgeführt, die hinteren Räder 30 demgegenüber als Lenkrollen, wobei ersichtlich auch andere Ausführungen der Räder (z.B. vier Lenkrollen) möglich sind. Die Räder 29, 30 weisen (feststellbare) Bremsen auf, mittels derer sich ein unbeabsichtigtes Wegrollen des Frachtgutträgers 12 bzw. der Ladevorrichtung 1 unterbinden lässt. An der Basisstruktur 2 sind demgegenüber vorliegend keine Räder angeordnet. Die Stützfüße 8 der Basisstruktur 2 sind so dimensioniert, dass sie zwischen den hinteren Rädern 30 des Frachtgutträgers 12 hindurchpassen. Im Sinne einer Modifikation könnten die hinteren Stützfüße 8 allerdings auch nach hinten hinter die hinteren Räder 30 versetzt und in diesem Falle so dimensioniert werden, dass ihre Ausladung im Wesentlichen der Spur der Räder 29, 30 entspricht. Seitwärts über die Spurbreite der Räder 29, 30 hinaus sollte sich die Basisstruktur 2 indessen - im Interesse einer guten Handhabbarkeit der Ladevorrichtung 1 - nicht erstrecken.

Die Ladevorrichtung 1 weist mehrere Antriebe auf. So ist insbesondere die Hubeinrichtung 4 mit einer Antriebseinheit ausgerüstet. Diese umfasst zwei parallel zueinander angeordnete Hydraulikzylinder 32, die sich, gelenkig an einem der Querträger 15 des Hubrahmens 11 angelenkt, zwischen dem Hubrahmen 11 und dem im Kreuzungspunkt 18 der Lenkerpaare 19, 20 des Scherenhebers 17 angeordneten Gelenkbolzen erstrecken. Der Beaufschlagung der Hydraulikzylinder 32 dient ein - nicht dargestelltes - Hydraulikaggregat, dessen Pumpe elektrisch betrieben wird. Die elektrische Speichereinheit der Antriebseinheit ist an dem Frachtgutträger 12 angeordnet. Sie weist einen Ladeanschluss auf, der an die elektrische Anlage eines als Kraftfahrzeug ausgeführten Transportfahrzeugs anschließbar ist. Alternativ wäre, insbesondre für Ladevorrichtungen mit reduzierter Leistung, beispielsweise die rein elektrische Ausführung der Antriebseinheit der Hubeinrichtung 4 möglich.

Mittels eine weiteren Antriebs, nämlich eines zwischen dem Hubrahmen 11 und dem Frachtgutträger 12 wirkenden elektrischen Ausfahrantriebs ist der Frachtgutträger 12 in seine ausgefahrene Stellung aus- und seine zu dem Hubrahmen 11 fluchtende Stellung einfahrbar. Weiterhin ist - beispielsweise durch Arretieren der Ausziehführung 13 oder Blockieren des Ausfahrantriebs - der Frachtgutträger 12 relativ zum Hubrahmen 11 verriegelbar und die Hubeinrichtung 4 in einer teilweise angehobenen Stellung der Ladestruktur 3 sperrbar. Auf diese Weise erfolgt eine Sicherung der Ladevorrichtung 1 (und des aufgenommenen Frachtguts F) auf der Ladefläche des Transportfahrzeugs während des Transports, indem nämlich der Frachtgutträger 12 relativ zu dem Hubrahmen 11 gesperrt und die Ladestruktur 3 als ganzes so weit angehoben wird, dass die Räder 29, 30 nicht mehr auf der Ladefläche aufliegen, so dass das gesamte Gewicht von Frachtgut F und Ladevorrichtung 1 über deren Grundrahmen 5 auf der Ladefläche abgestützt wird.

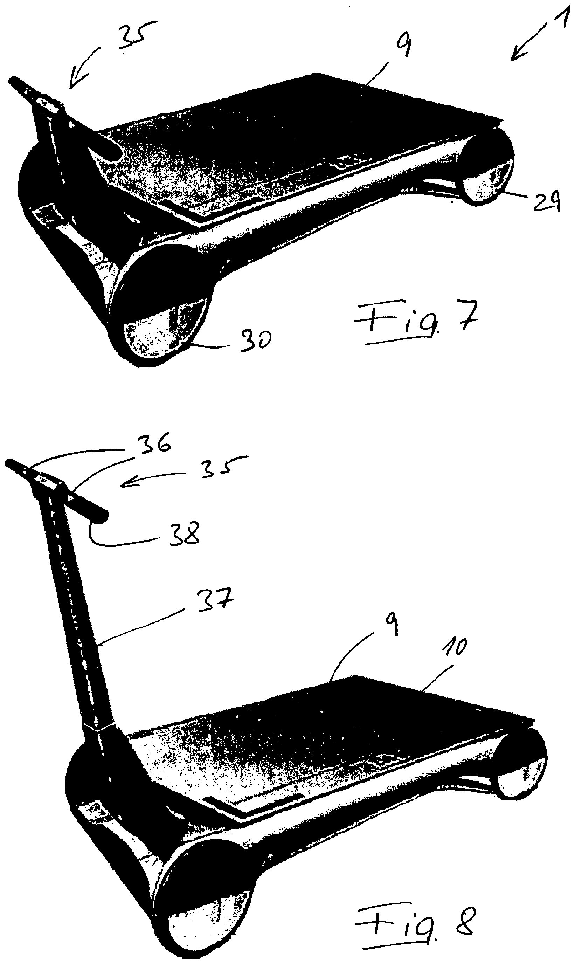

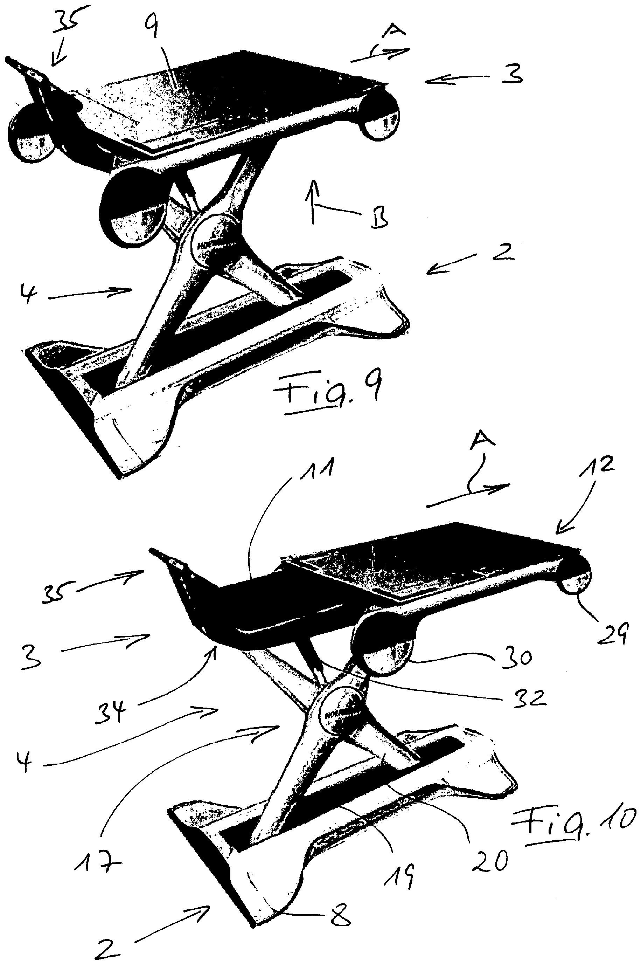

Die Bedienung bzw. Betätigung der verschiedenen Antriebe durch eine Bedienperson erfolgt bei der Ausführungsform nach den Fig. 1 bis 6 durch Bedienelemente, die in die an dem Frachtgutträger 12 angebrachten Griffe 33 integriert sind. Namentlich in dieser Hinsicht verfolgt die zweite, in den Fig. 7 bis 10 illustrierte Ausführungsform einen anderen Ansatz. Denn bei dieser ist an dem Hubrahmen 11 an dessen der Ausziehrichtung A entgegengesetztem Ende 34 eine Handhabe 35 angeordnet, welche Bedienelemente 36 für die Betätigung der verschiedenen Antriebe aufweist und die weiterhin dazu dient, die Ladevorrichtung 1 bei deren Fortbewegung auf der Verkehrsfläche bzw. der Ladefläche des Transportfahrzeuges zu dirigieren bzw. zu manövrieren.

Die Handhabe 35 weist eine leicht nach hinten geneigte, aus ihrer Verstaustellung (Fig. 7) teleskopisch in eine Betriebsstellung (Fig. 8) ausfahrbare Deichsel 37 auf. Der die Verstellung der Länge der Deichsel 37 bewirkende Längenverstellantrieb ist dabei - über die Steuerung der Ladevorrichtung 1 - in dem Sinne invers mit der Antriebseinheit der Hubeinrichtung 4 gekoppelt, dass sich beim Anheben der Ladestruktur 3 die Länge der Deichsel 37 im Wesentlichen in dem Maße verkürzt, wie die Ladestruktur 3 angehoben wird, so dass im Ergebnis die Griffe 38 der Handhabe 35 beim Heben der Ladestruktur 3 zumindest im Wesentlichen auf einer konstanten Höhe verbleiben. Entsprechendes gilt beim Absenken der Ladestruktur 3. Über an der Handhabe 35 angeordnete Bedienelemente 36 sind bei dieser Ausführungsform im Übrigen auch die den Rädern 29, 30 zugeordneten Bremsen betätigbar.

Andere markante Abweichungen der Ausführungsform nach den Fig. 7 bis 10 von derjenigen nach den Fig. 1 bis 6 bestehen in konstruktiven Details des Scherenhebers 17 sowie der Ausziehführung 13 für den Frachtgutträger 12, wobei die Abweichungen allerdings ohne Auswirkung sind auf die grundsätzliche Funktion, so dass die vorstehenden Erläuterungen der ersten Ausführungsform im Wesentlichen auch für die zweite gelten. Anders gestaltet als bei der ersten Ausführungsform sind bei der zweiten im Übrigen auch die Räder 29, 30. Diese sind seitlich an dem Frachtgutträger 12 angeordnet, so dass sie - im Interesse einer gesteigerten Tauglichkeit für die Nutzung auf unebenen Verkehrsflächen - einen vergleichsweise großen Durchmesser aufweisen können.

Mit der Steuerung der Ladevorrichtung können im Übrigen insbesondere Lastsensoren verbunden sein, die den Rädern 29, 30 und/oder den Stützfüßen 8 der Basisstruktur 2 zugeordnet sind. Durch Überwachung der Belastungssituation an den Stützfüßen 8 und/oder den Rädern 29, 30 können Belastungszustände, die für die Standsicherheit der Ladevorrichtung 1 kritisch werden könnten, frühzeitig erkannt werden, und es kann eine (z.B. akustische) Warnung und/oder ein automatisches Sperren eines oder mehrerer Antriebe erfolgen.

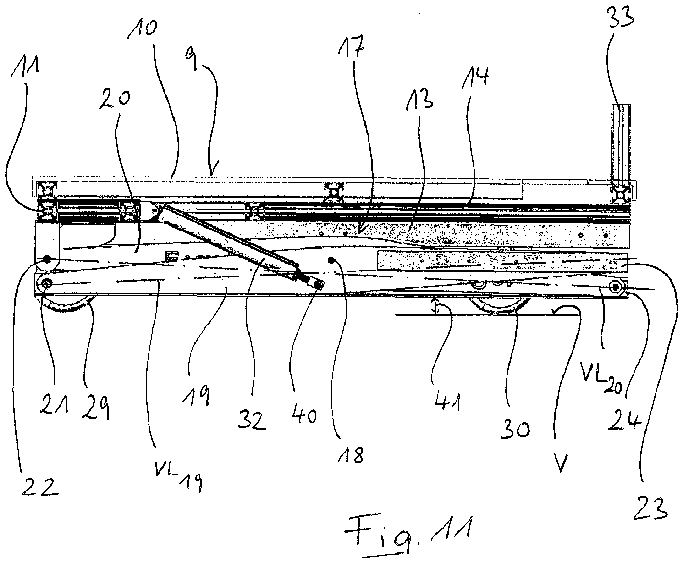

Was die in Fig. 11 veranschaulichte Ausführungsform angeht, so erklärt sich diese ohne weiteres aus den vorstehenden Erläuterungen der Fig. 1 bis 10. Hinzuweisen ist allerdings auf die gut erkennbare leichte Kröpfung der Lenker 19 und 20 des Scherenhebers 17 dergestalt, dass das im Kreuzungspunkt 18 vorgesehene Gelenk nicht exakt auf den Verbindungslinien VL₁₉ und VL₂₀ der beiden jeweils endseitig an den Lenkern 19, 20 angeordneten Lager liegt, sondern vielmehr geringfügig gegenüber diesen Verbindungslinien nach oben versetzt.

Umgekehrt ist der Anlenkungspunkt 40 der Hydraulikzylinder 32 an den Lenkern 19 geringfügig gegenüber der Verbindungslinie VL₁₉ von dessen endseitigen Lagern nach unten versetzt. Auf diese Weise ergibt sich ein Scherenheber 17, der in seiner (gezeigten) vollständig eingefahrenen Konfiguration so flach ist, dass er nicht (geringfügig nach oben zwischen die Ausziehführungen 13 ragend) nur unter der Ladestruktur 3 Platz findet, sondern auch noch eine hinreichende Bodenfreiheit 41 verbleibt, und das bei einer für das Heben schwerer Lasten hinreichend starken Dimensionierung der Lenker 19, 20 und einem auf das Heben schwerer Lasten abgestimmten Kinematik des Antriebs. Zu erkennen ist in Fig. 11 auch, dass der Hubrahmen 11 und die beiden mit diesem über die Ausziehführungen 13 verbundenen Rahmenteile 42 des Frachtgutträgers 12, wie bereits in den Figuren 1 bis 6 veranschaulicht, im Wesentlichen in der selben Ebene liegen, wobei in der eingefahrenen Stellung des Frachtgutträgers 12 der Hubrahmen 11 zwischen den Rahmenteilen 42 des Frachtgutträgers Platz findet.

Bei beiden Ausführungsformen stellt sich der Ablauf beim Beladen eines Transportfahrzeugs mit Frachtgut F (einschließlich des Beförderns des Frachtguts zum Transportfahrzeug) typischerweise wie folgt dar:
Die Ladevorrichtung 1 wird mit abgesenkter Ladestruktur 3 und auf deren eingefahrenen Frachtgutträger 12 aufgenommenem Frachtgut F - auf den an dem Frachtgutträger 12 angeordneten Rädern 29, 30 - auf der Verkehrsfläche V zum Transportfahrzeug bewegt, wobei die Ausziehführung verriegelt und Basisstruktur 2 mittels der Hubeinrichtung 4 vollständig angehoben ist.

Die Ladevorrichtung 1 wird benachbart zum Transportfahrzeug, nahe der Zugangsöffnung zu dessen Ladefläche positioniert, und zwar mit der Ausziehrichtung A zum Transportfahrzeug weisend.

Je nach den Geländeverhältnissen können bzw. sollten in dieser Situation die Räder 29, 30 gebremst werden.

Zum Absetzen der Basisstruktur 2 auf der Verkehrsfläche und anschließendem Anheben der Ladestruktur 3 wird die Hubeinrichtung 4 betätigt, und zwar so lange, bis sich die Räder 29, 30 des Frachtgutträgers 12 geringfügig über dem Niveau der Ladefläche des Transportfahrzeugs befinden. Ggf. angezogenen Bremsen der Räder 29, 30 können wieder gelöst werden.

Nach dem Entriegeln der Ausziehführung 13 wird der Frachtgutträger 12 unter Nutzung der Ausziehführung 13 (und des ggf. vorhandenen Ausfahrantriebs) in Ausziehrichtung A verfahren und gelangt dabei zunehmend über die Ladefläche des Transportfahrzeugs.

Sobald sich die frontseitigen Räder 29 des Frachtgutträgers 12 über der Ladefläche des Transportfahrzeugs befinden, wird die Ladestruktur 3 mittels der Hubeinrichtung 4 so weit abgesenkt, dass die frontseitigen Räder 29 des Frachtgutträgers 12 auf der Ladefläche des Transportfahrzeugs aufsetzen.

Der Frachtgutträger 12 wird - unter fortgesetzter Nutzung der Ausziehführung 13 (und ggf. des Ausfahrantriebs) - weiter in Ausziehrichtung A verfahren, wobei auch die rückwärtigen Räder 30 des Frachtgutträgers 12 auf der Ladefläche des Transportfahrzeugs aufsetzen. Die Bremsen der Räder 29, 30 werden angezogen.

Die Hubeinrichtung 4 wird im Sinne eines Anhebens der Basisstruktur 2 betätigt.

Bei vollständig angehobener Basisstruktur 2 wird diese unter Nutzung der Ausziehführung 13 (und ggf. des Ausfahrantriebs) eingefahren, d.h. unter die Ladestruktur 3 geschoben. Anschließend wird die Ausziehführung 13 verriegelt.

Die Bremsen werden gelöst, und die Ladevorrichtung 1 kann auf der Ladefläche des Transportfahrzeugs an ihre endgültige Position rangiert werden.

Je nach den Standverhältnissen des Trägerfahrzeugs können bzw. sollten bei Erreichen der endgültigen Position die Räder 29, 30 gebremst werden.

Mittels der Hubeinrichtung 4 wird die Ladestruktur 3 geringfügig angehoben, nämlich so weit, bis die Räder 29, 30 von der Ladefläche des Transportfahrzeugs abheben. In dieser Stellung wird die Hubeinrichtung 4 gesperrt.

Je nach Bedarf kann das - auf der Ladevorrichtung 1 verbleibende - Frachtgut F mittels gesonderter Sicherungsmittel direkt am Transportfahrzeug gegen Verrutschen etc. gesichert werden.

Zum Entladen von Frachtgut aus dem Transportfahrzeug wird in umgekehrter Reihenfolge vorgegangen.

## Patentansprüche

1. Ladevorrichtung (1), insbesondere um Frachtgut (F) auf einer Verkehrsfläche (V) zu befördern und in ein Transportfahrzeug ein- bzw. aus diesem auszuladen, umfassend eine Basisstruktur (2), eine Ladestruktur (3) mit einer Frachtgutaufnahme (10) und eine zwischen der Basisstruktur (2) und der Ladestruktur (3) doppelt wirkende Hubeinrichtung (4), wobei die Ladestruktur (3) einen Hubrahmen (11), an welchem die Hubeinrichtung (4) angreift, und einen Frachtgutträger (12), der an dem Hubrahmen (11) über eine Ausziehführung (13) mit einer quer zur Hubrichtung (B) orientierten Ausziehrichtung (A) gelagert ist und die Frachtgutaufnahme (10) aufweist, umfasst, wobei ein der Fortbewegung der Ladevorrichtung (1) auf der Verkehrsfläche (V) dienendes Fahrwerk (43) Teil des Frachtgutträgers (12) ist,
**dadurch gekennzeichnet,**
**dass** die Hubeinrichtung (4) einen Scherenheber (17) umfasst, dessen in Ausziehrichtung (A) gelegene Lagerung an der Basisstruktur (2) als Festlager (21) und dessen der Ausziehrichtung (A) entgegengesetzt gelegene Lagerung an der Basisstruktur (21) als Loslager ausgeführt ist.

2. Ladevorrichtung nach Anspruch 1, **dadurch gekennzeichnet, dass** das Fahrwerk (43) Räder (29, 30), bevorzugt vier Räder (29, 30) umfasst, welche besonders bevorzugt randseitig an dem Frachtgutträger (12) angeordnet sind.

3. Ladevorrichtung nach Anspruch 2, **dadurch gekennzeichnet, dass** zumindest ein Teil der Räder (29, 30) lenkbar ist.

4. Ladevorrichtung nach Anspruch 2 oder Anspruch 3, **dadurch gekennzeichnet, dass** zumindest ein Teil der Räder (29, 30) Bremsen aufweist, welche bevorzugt fernbetätigbar sind.

5. Ladevorrichtung nach einem der Ansprüche 1 bis 4, **dadurch gekennzeichnet, dass** sich die Basisstruktur (2) seitwärts nicht über die Breite des Fahrwerks (43), insbesondere die Spurbreite der Räder (29, 30) hinaus erstreckt.

6. Ladevorrichtung nach Anspruch 5, **dadurch gekennzeichnet, dass** die Breite der Basisstruktur (2) auf deren der Ausziehrichtung (A) entgegengesetzten Seite im Wesentlichen der Breite des Fahrwerks (43), insbesondere die Spurbreite der Räder (30) entspricht.

7. Ladevorrichtung nach einem der Ansprüche 1 bis 6, **dadurch gekennzeichnet, dass** an der Basisstruktur (2) Stützfüße (8) angeordnet sind.

8. Ladevorrichtung nach Anspruch 7, **dadurch gekennzeichnet, dass** zumindest einem der Stützfüße (8) ein Lastsensor zugeordnet ist.

9. Ladevorrichtung nach Anspruch 7 oder Anspruch 8, **dadurch gekennzeichnet, dass** zumindest einer der Stützfüße (8) seitwärts ausfahrbar, ausziehbar oder ausklappbar ist.

10. Ladevorrichtung nach einem der Ansprüche 1 bis 9, **dadurch gekennzeichnet, dass** an der Basisstruktur (2) keine Räder angeordnet sind.

11. Ladevorrichtung nach einem der Ansprüche 1 bis 10, **dadurch gekennzeichnet, dass** ein zwischen dem Hubrahmen (11) und dem Frachtgutträger (12) wirkender Ausfahrantrieb vorgesehen ist.

12. Ladevorrichtung nach Anspruch 11, **dadurch gekennzeichnet, dass** auf den Ausfahrantrieb eine Steuerung einwirkt, welche die Ausfahrbewegung unter Berücksichtigung von sicherheitsrelevanten Kenngrößen steuert.

13. Ladevorrichtung nach einem der Ansprüche 1 bis 12, **dadurch gekennzeichnet, dass** an dem Frachtgutträger (12), bevorzugt im Bereich frontseitiger Räder (29), mindestens ein Sensor zur Erfassung der Position des Frachtgutträgers (12) relativ zu einer Ladefläche angeordnet ist.

14. Ladevorrichtung nach einem der Ansprüche 1 bis 13, **dadurch gekennzeichnet, dass** mindestens einer der Lenker (19, 20) des Scherenhebers gekröpft ist und/oder ein Antriebselement (32) versetzt zum Gelenkpunkt (18) an einem der Lenker (19) angreift.

15. Ladevorrichtung nach einem der Ansprüche 1 bis 14, **dadurch gekennzeichnet, dass** die Hubeinrichtung (4) eine elektrische oder eine elektro-hydraulische Antriebseinheit umfasst.

16. Ladevorrichtung nach Anspruch 15, **dadurch gekennzeichnet, dass** eine elektrische Speichereinheit der Antriebseinheit am Hubrahmen (11), bevorzugt an dessen in Ausziehrichtung (A) weisender Frontseite angeordnet ist.

17. Ladevorrichtung nach Anspruch 15 oder Anspruch 16, **dadurch gekennzeichnet, dass** eine elektrische Speichereinheit der Antriebseinheit als Wechselakku ausgeführt ist.

18. Ladevorrichtung nach einem der Ansprüche 15 bis 17, **dadurch gekennzeichnet, dass** eine elektrische Speichereinheit der Antriebseinheit einen an die elektrische Anlage eines als Kraftfahrzeug ausgeführten Transportfahrzeugs anschließbaren Ladeanschluss aufweist.

19. Ladevorrichtung nach einem der Ansprüche 1 bis 18, **dadurch gekennzeichnet, dass** an dem Frachtgutträger (12) frontseitig mindestens eine veränderlich positionierbare Behelfsrolle angeordnet ist.

20. Ladevorrichtung nach einem der Ansprüche 1 bis 19, **dadurch gekennzeichnet, dass** der Frachtgutträger (12) relativ zum Hubrahmen (11) verriegelbar ist.

21. Ladevorrichtung nach einem der Ansprüche 1 bis 20, **dadurch gekennzeichnet, dass** die Hubeinrichtung (4) in einer teilweise angehobenen Stellung der Ladestruktur (3) sperrbar ist.

22. Ladevorrichtung nach einem der Ansprüche 1 bis 21, **dadurch gekennzeichnet, dass** an dem Hubrahmen (11) an dessen der Ausziehrichtung (A) entgegengesetzten Ende eine Bedienelemente aufweisende Handhabe (35) angeordnet ist.

23. Ladevorrichtung nach Anspruch 22, **dadurch gekennzeichnet, dass** die Handhabe (35) schwenkbar oder einschiebbar am Hubrahmen (11) oder an der Basisstruktur (2) angebracht ist.

24. Ladevorrichtung nach Anspruch 22, **dadurch gekennzeichnet, dass** die Handhabe (35) eine ausfahrbare Deichsel (37) aufweist, wobei die Ausfahrrichtung der Deichsel (37) bevorzugt in rückwärtiger Richtung geneigt schräg zur Hubrichtung (B) orientiert ist.

25. Ladevorrichtung nach Anspruch 24, **dadurch gekennzeichnet, dass** die Länge der Deichsel (37) mittels eines Längenverstellantriebs veränderbar ist, wobei der Längenverstellantrieb bevorzugt phasenweise mit dem Hubantrieb invers koppelbar ist.

26. Ladevorrichtung nach einem der Ansprüche 1 bis 25, **dadurch gekennzeichnet, dass** der Frachtgutträger (12), insbesondere als Teil eines auswechselbaren Aufsatzes, eine Ladeplattform (9), mindestens eine Schüttgutaufnahme oder eine Spezialhalterung aufweist.

27. Ladevorrichtung nach einem der Ansprüche 1 bis 26, **dadurch gekennzeichnet, dass** der Frachtgutträger (12) zur Anbringung von Befestigungs- und/oder Sicherungsmitteln für das Frachtgut geeignete Halterungen aufweist.

## Claims

1. A loading apparatus (1), especially for conveying freight (F) over a road surface (V) and loading it into or unloading it from a transport vehicle, comprising:
a base structure (2),
a loading structure (3) with a freight holder (10) and
a double-acting lifting device (4) between the base structure (2) and the loading structure (3),
wherein the loading structure (3) comprises a lifting frame (11), on which the lifting device (4) acts, and a freight carrier (12), which is mounted on the lifting frame (11) via a pull-out guide (13) with a pull-out direction (A) oriented transversely relative to the lifting direction (B) and is equipped with the freight holder (10), and
wherein an undercarriage (43) serving for travel of the loading apparatus (1) over the road surface (V) is part of the freight carrier (12),
**characterized in that**
the lifting device (4) comprises a scissor lift (17), wherein that bearing of the scissor lift (17) on the base structure (2) located in pull-out direction (A) is designed as a fixed bearing (21) and wherein that bearing of the scissor lift (17) on the base structure (2) located opposite the pull-out direction (A) is constructed as a floating bearing.

2. The loading apparatus of claim 1, wherein the undercarriage (43) comprises wheels (29, 30), preferably four wheels (29, 30), which particularly preferably are disposed on the side edges of the freight carrier (12).

3. The loading apparatus of claim 2, wherein that at least some of the wheels (29, 30) are steerable.

4. The loading apparatus of claim 2 or claim 3, wherein at least some of the wheels (29, 30) are equipped with brakes, which preferably can be remotely actuated.

5. The loading apparatus to one of claims 1 to 4, wherein the base structure (2) does not extend laterally beyond the width of the undercarriage (43), especially the track width of the wheels (29, 30).

6. The loading apparatus of claim 5, wherein the width of the base structure (2) on its side opposite the pull-out direction (A) corresponds substantially to the width of the undercarriage (43), especially the track width of the wheels (30).

7. The loading apparatus to one of claims 1 to 6, wherein support feet (8) are disposed on the base structure (2).

8. The loading apparatus of claim 7, wherein a load sensor is assigned to at least one of the support feet (8).

9. The loading apparatus of claim 7 or claim 8, wherein at least one of the support feet (8) can be laterally extended, pulled out or folded out.

10. The loading apparatus to one of claims 1 to 9, wherein no wheels are disposed on the base structure (2).

11. The loading apparatus to one of claims 1 to 10, wherein an extending drive acting between the lifting frame (11) and the freight carrier (12) is provided.

12. The loading apparatus of claim 11, wherein a controller, which controls the extension movement with due consideration of safety-relevant parameters, acts on the extending drive.

13. The loading apparatus to one of claims 1 to 12, wherein at least one sensor for detection of the position of the freight carrier (12) relative to a loading surface is disposed on the freight carrier (12), preferably in the region of the front wheels (29).

14. The loading apparatus to one of claims 1 to 13, wherein at least one of the arms (19, 20) of the scissor lift is cranked and/or a drive element (32) acts on one of the arms (19) at a position offset from the pivot point (18).

15. The loading apparatus to one of claims 1 to 14, wherein the lifting device (4) comprises an electrical or an electrohydraulic drive unit.

16. The loading apparatus of claim 15, wherein an electrical storage unit of the drive unit is disposed on the lifting frame (11), preferably on its front side pointing in pull-out direction (A).

17. The loading apparatus of claim 15 or claim 16, wherein an electrical storage unit of the drive unit is designed as an interchangeable battery.

18. The loading apparatus to one of claims 15 to 17, wherein an electrical storage unit of the drive unit is provided with a charging terminal, which can be connected to the electrical system of a transport vehicle designed as a motor vehicle.

19. The loading apparatus to one of claims 1 to 18, wherein at least one auxiliary roller is disposed at variable positions on the front side of the freight carrier (12).

20. The loading apparatus to one of claims 1 to 19, wherein the freight carrier (12) can be interlocked relative to the lifting frame (11).

21. The loading apparatus to one of claims 1 to 20, wherein the lifting device (4) can be locked in a partly raised position of the loading structure (3).

22. The loading apparatus to one of claims 1 to 21, wherein a handle (35), which is equipped with operator controls, is disposed on the lifting frame (11) at its end opposite the pull-out direction (A).

23. The loading apparatus of claim 22, wherein the handle (35) is attached to the lifting frame (11) or to the base structure (2) by pivoting or retracting means.

24. The loading apparatus of claim 22, wherein the handle (35) is equipped with an extensible drawbar (37), wherein the extension direction of the drawbar (37) is oriented obliquely relative to the lifting direction (B), preferably by being inclined slightly in rearward direction.

25. The loading apparatus of claim 24, wherein the length of the drawbar (37) can be varied by a length-adjusting drive, wherein the length-adjusting drive preferably can be inversely coupled phase-wise with the lifting drive.

26. The loading apparatus of one of claims 1 to 25, wherein the freight carrier (12) is provided with a loading platform (9), at least one bulk-goods holder or a special retainer, especially as part of an exchangeable attachment.

27. The loading apparatus of one of claims 1 to 26, wherein the freight carrier (12) is provided with suitable retainers for attachment of fastening and/or securing means for the freight.

## Revendications

1. Dispositif de chargement (1), notamment pour transporter sur une zone de circulation (V) et charger dans un véhicule de transport et décharger de celui-ci des marchandises ordinaires (F) , comprenant une structure de base (2), une structure de chargement (3) avec une aire de réception de marchandises (10) et un dispositif de levage (4) à double effet entre la structure de base (2) et la structure de chargement (3), la structure de chargement (3) comprenant un cadre de levage (11) sur lequel le dispositif de levage (4) vient en prise et un support de marchandises (12) qui est logé sur le cadre de levage (11) sur une glissière de dépliage (13) avec un direction de pliage (A) orientée transversalement à la direction de levage (B) et comporte l'aire de réception de marchandises (10), un châssis (43) servant au déplacement du dispositif de chargement (1) sur la zone de circulation (V), étant une partie du support de marchandises (12)
**caractérisé en ce que**
le dispositif de levage (4) comprend un élévateur articulé (17), dont le logement situé dans la direction de dépliage (A) sur la structure de base (2) est exécuté comme palier fixe (21) et dont le logement situé opposé à la direction de dépliage (A) sur la structure de base (21) est exécuté comme palier mobile.

2. Dispositif de chargement selon la revendication 1, **caractérisé en ce que** le châssis (43) comprend des roues (29, 30), de préférence quatre roues (29, 30), lesquelles sont disposées notamment de préférence sur les bords du support de marchandises (12).

3. Dispositif de chargement selon la revendication 2, **caractérisé en ce qu'**au moins une partie des roues (29, 30) est orientable.

4. Dispositif de chargement selon la revendication 2 ou la revendication 3, **caractérisé en ce qu'**au moins une partie des roues (29, 30) comporte des freins, lesquels peuvent être de préférence commandés à distance.

5. Dispositif de chargement selon l'une quelconque des revendications 1 à 4 **caractérisé en ce que** la structure de base (2) ne s'étend pas latéralement au-delà de la largeur du châssis (43), notamment de la largeur de voie des roues (29, 30).

6. Dispositif de chargement selon la revendication 5, **caractérisé en ce que** la largeur de la structure de base (2), notamment la largeur de voie des roues (30), correspond pour l'essentiel à la largeur du châssis (43) sur son côté opposé à la direction de dépliage (A).

7. Dispositif de chargement selon l'une quelconque des revendications 1 à 6, **caractérisé en ce que** des pieds de soutien (8) sont disposés sur la structure de base (2).

8. Dispositif de chargement selon la revendication 7, **caractérisé en ce qu'**au moins un capteur de charge est affecté à un des pieds de soutien (8).

9. Dispositif de chargement selon la revendication 7 ou la revendication 8, **caractérisé en ce qu'**au moins un des pieds de soutien (8) peut être latéralement extensible, dépliable ou repliable.

10. Dispositif de chargement selon l'une quelconque des revendications 1 à 9, **caractérisé en ce qu'**aucune roue n'est disposée sur la structure de base (2).

11. Dispositif de chargement selon l'une quelconque des revendications 1 à 10, **caractérisé en ce qu'**un mécanisme de dépliage agissant entre le cadre de lavage (11) et le support de marchandises (12) est prévu.

12. Dispositif de chargement selon la revendication 11, **caractérisé en ce qu'**une commande agit sur le mécanisme de dépliage, laquelle commande le mouvement de dépliage en tenant compte de paramètres relevant de la sécurité.

13. Dispositif de chargement selon l'une quelconque des revendications 1 à 12, **caractérisé en ce qu'**un capteur destiné à la saisie de la position du support de marchandises (12) par rapport à une surface de chargement est disposé sur le support de marchandises (12) de préférence dans la zone des roues avant (29).

14. Dispositif de chargement selon l'une quelconque des revendications 1 à 13, **caractérisé en ce qu'**au moins un des bras (19, 20) de l'élévateur articulé est coudé et/ou un élément d'entraînement (32) décalé par rapport au point d'articulation (18) vient en prise sur un des bras (19).

15. Dispositif de chargement selon l'une quelconque des revendications 1 à 14, **caractérisé en ce que** le dispositif de levage (4) comprend une unité d'entraînement électrique ou électro-hydraulique.

16. Dispositif de chargement selon la revendication 15, **caractérisé en ce qu'**une unité d'accumulation électrique de l'unité d'entraînement est disposée sur le cadre de levage (11), de préférence sur la face avant tournée dans le sens de dépliage (A) de celui-ci.

17. Dispositif de chargement selon la revendication 15 ou la revendication 16, **caractérisé en ce qu'**une unité d'accumulation électrique de l'unité d'entraînement est exécutée comme une batterie rechargeable.

18. Dispositif de chargement selon l'une quelconque des revendications 15 à 17, **caractérisé en ce qu'**une unité d'accumulation électrique de l'unité d'entraînement comporte une connexion de charge connectable à l'installation électrique d'un véhicule de transport conçu comme un véhicule automobile.

19. Dispositif de chargement selon l'une quelconque des revendications 1 à 18, **caractérisé en ce qu'**au moins un galet d'assitance pouvant être positionné de différentes façons est disposé à l'avant sur le support de marchandises (12).

20. Dispositif de chargement selon l'une quelconque des revendications 1 à 19, **caractérisé en ce que** le support de marchandises (12) peut être verrouillé par rapport au cadre de levage (11).

21. Dispositif de chargement selon l'une quelconque des revendications 1 à 20, **caractérisé en ce que** le dispositif de levage (4) peut être bloqué dans une position partiellement relevée de la structure de chargement (3).

22. Dispositif de chargement selon l'une quelconque des revendications 1 à 21, **caractérisé en ce qu'**une poignée (35) comportant des éléments de commande est disposée sur le cadre de levage (11) à l'extrémité opposée à la direction de dépliage (A) de celui-ci.

23. Dispositif de chargement selon la revendication 22, **caractérisé en ce que** la poignée (35) est montée sur le cadre de levage (11) ou sur la structure de base (2) pouvant pivoter ou être insérée.

24. Dispositif de chargement selon la revendication 22, **caractérisé en ce que** la poignée (35) comporte un timon (37) extensible, la direction de dépliage du timon (37) de préférence dans la direction arrière étant orientée inclinée en diagonale par rapport à la direction de levage (B).

25. Dispositif de chargement selon la revendication 24, **caractérisé en ce que** la longueur du timon (37) peut être modifiée au moyen d'une commande de réglage de longueur, la commande de réglage de longueur pouvant être couplée inversement de préférence par phase avec la commande de levage.

26. Dispositif de chargement selon l'une quelconque des revendications 1 à 25, **caractérisé en ce que** le support de marchandises (12) comporte une plateforme de chargement (9), notamment en tant que partie d'une réhausse interchangeable, au moins une aire de réception de marchandises en vrac ou une fixation spéciale.

27. Dispositif de chargement selon l'une quelconque des revendications 1 à 26, **caractérisé en ce que** le support de marchandises (12) comporte des fixations appropriées pour monter des moyens de fixation et/ou de sécurisation pour les marchandises.
